# EUROPÄISCHE PATENTSCHRIFT

(11) **EP 3 535 500 B1**
(45) Veröffentlichungstag und Bekanntmachung des Hinweises auf die Patenterteilung: **17.05.2023**
(21) Anmeldenummer: 17808359.8
(22) Anmeldetag: 13.11.2017
(51) Int. Cl.: F16F 1/38, F16F 13/14

(54) **KERN, LAGER UMFASSEND EINEN DERARTIGEN KERN UND VERFAHREN ZUM HERSTELLEN DES LAGERS**
CORE, BEARING COMPRISING SUCH A CORE, AND METHOD FOR PRODUCING THE BEARING
NOYAU, PALIER ÉQUIPÉ D'UN TEL NOYAU ET PROCÉDÉ DE PRODUCTION DE CE PALIER

(30) Priorität: 05.12.2016 DE 102016123501
(43) Veröffentlichungstag der Anmeldung: 11.09.2019
(73) Patentinhaber: Vibracoustic SE, 64293 Darmstadt (DE)
(72) Erfinder: WERNER, Philipp, 21339 Lüneburg (DE); SCHROEDER, Bastian, 22041 Hamburg (DE)
(74) Vertreter: Patentanwälte Olbricht Buchhold Keulertz
(86) Internationale Anmeldenummer: PCT/EP2017/079083
(87) Internationale Veröffentlichungsnummer: WO 2018/104007

(56) Entgegenhaltungen:
- EP-A2- 2 583 765
- WO-A1-2004/055406
- WO-A1-2006/025086
- WO-A1-2012/119748
- FR-A- 1 419 349
- FR-A1- 2 739 153
- JP-A- H02 113 137
- JP-U- H0 654 938
- US-A1- 2010 295 224

## Beschreibung

Die Erfindung betrifft einen Kern zum Kalibrieren eines Elastomerkörpers eines elastischen Lagers oder eines hydraulisch dämpfenden Lagers. Ferner betrifft die Erfindung ein elastisches Lager oder ein hydraulisch dämpfendes Lager umfassend einen derartigen Kern sowie ein Verfahren zum Herstellen des elastischen Lagers oder des hydraulisch dämpfenden Lagers.

Die Kalibrierung von Gummi in elastischen Lagern ist allgemein üblich, um herstellungsbedingte Zugspannungen im Elastomer zu reduzieren oder ganz zu eliminieren. Zugspannungen entstehen belastungsbedingt, aber auch herstellungsbedingt aufgrund des thermischen Ausdehnungskoeffizienten, etwa durch das Abkühlen nach der Vulkanisation. Häufig wird die Kalibrierung über ein Verkleinern des äu-βeren Hüllrohrs vorgenommen. In einigen Fällen weitet man jedoch auch die Bohrung des Kerns auf, um hierdurch den Außendurchmesser des Kerns zu vergrö-βern. Dieses Verfahren wird als Aufdornen bezeichnet.

Das Aufdornen wird schwieriger, je dickwandiger die Kerne sind. Auch eine ungleichmäßige Wandstärke des Kerns, etwa bei einem rechteckförmigen Kern, erschwert die gezielte Einstellung von Kalibrierraten durch Aufdornen darüber hinaus erheblich. Eine gezielte Kalibrierung des Kerndurchmessers in nur einer Richtung ist durch Aufdornen kaum zu realisieren.

Darüber hinaus kann eine Kalibrierung eines hydraulischen Lagers von außen zu Beschädigungen der Dichtungen oder der Befüllbohrung führen, oder Einlegeteile, etwa Kanäle oder Anschläge, können durch den Kalibrierprozess verrutschen oder sich verwerfen. Ist kein Bauraum für eine Befüllbohrung vorhanden, so ist eine Außenkalibrierung bei Hydrolagern besonders kritisch. Denn die Kalibrierung erfolgt vor der Montage der Außenhülse am Tragkörper, sodass die Gefahr einer Dichtungsbeschädigung durch partielles Abkneifen besonders hoch ist, greifen doch die segmentierten Kalibrierbacken direkt auf die Dichtungen. Wird hingegen das Lager erst nach der Montage der Außenhülse kalibriert, so umgreifen zwar die Kalibrierbacken die Außenhülse, was ein Abkneifen der Dichtungen verhindert, allerdings wird in diesem Fall ein bereits befülltes Lager kalibriert, was zu einem Anstieg des Innendrucks führt und häufig nachteilig für die Lebensdauer des Bauteils ist. Daher lassen sich ohne die zuvor genannten Nachteile nur Hydrolager von außen über die montierte Außenhülse kalibrieren, solange das Lager noch nicht befüllt ist. Der Befüllvorgang muss in diesem Fall erst nach dem Kalibrieren des montierten Lagers durch eine Befüllbohrung erfolgen, sodass der Kalibriervorgang keinen Einfluss auf den Innendruck des Lagers hat.

Aus DE 10 2006 055 128 B4 ist ein Kern für ein elastisches Lager bekannt, der zwischen Kernführungen eingepresst wird. Durch die dabei auftretenden Kräfte wird eine Elastomerfeder vorgespannt.

Aus DE 2 406 131 A ist eine Innenhülse bekannt, die in einen elastomeren Einsatz eingepresst ist. Die Hülse kann einen kreisförmigen, rechteckigen oder länglichen Querschnitt haben.

WO 2004/055406 A1 beschreibt ein Gelenk zur elastischen mechanischen Verbindung zweier Maschinenteile. Das Gelenk umfasst eine Pratze und ein Gehäuse. Die Pratze weist einen mittleren Bereich auf, der von dem Gehäuse umfasst ist und zwei Endbereiche an denen jeweils eines der zu verbindenden Maschinenteile befestigt ist. Die Pratze stellt ein rotationssymmetrisches Drehteil dar und das Gehäuse besteht aus zumindest zwei konzentrisch ineinandergesteckten Buchsen, welche zusammen einen Hohlzylinder definieren, dessen Zwischenraum mit einem elastischen Material ausgegossen ist. Außerdem weist die Pratze zur Fixierung von Maschinenteilen in dem nicht-eingepressten Bereich Bohrungen auf.

US 2010/295224 A1 offenbart eine Federbeinaufhängung, bei der ein Vorkomprimierungsbauteil in ein inneres Rohr eingepresst wird. Das innere Rohr wird dabei verformt und komprimiert einen Gummi, der die Übertragung von Vibrationen zwischen dem inneren Rohr und einem äußeren Rohr reduziert.

JP H02 113137 A betrifft eine Lagerbuchse, die aus einem ersten inneren Zylinder und einem Rahmen besteht, wobei der Rahmen den ersten inneren Zylinder umgibt. Der Rahmen wird von einem Gummi mit dem äußeren Zylinder verbunden.

WO 2006/025086 A1 zeigt eine Buchse, die ein innenliegendes Rohr, ein elastischen Körper und ein außenliegendes Rohr aufweisen. Der elastische Körper verbindet das innenliegende Rohr und das außenliegende Rohr. Das innenliegende Rohr wird gebildet, indem ein dickwandiges, innenliegendes Rohr in ein zweites innenliegendes Rohr gepresst wird.

FR 2739153 betrifft ein elastisches Scharnier, das insbesondere für eine Aufhängung eines Kraftfahrzeugs bestimmt ist. Das elastische Material ist zwischen einem äußeren Rahmen und einen inneren, runden Rahmen angeordnet.

JP H06 54938 U 26 beschreibt eine Lagerbuchse, die aus einem Gehäuse, einem äußeren Zylinder mit Einbuchtungen und einem innerhalb davon liegenden Elastomerkörper besteht. Der äußere Zylinder wird beim Einpressen in das Gehäuse komprimiert und bringt somit eine Vorspannung in den innenliegenden Elastomerkörper ein.

Der Erfindung liegt die Aufgabe zugrunde, einen Kern, ein elastisches Lager oder ein hydraulisch dämpfendes Lager, die eine verbesserte Kalibrierbarkeit aufweisen, und ein Verfahren zum Herstellen eines derartigen elastischen oder hydraulisch dämpfenden Lagers zu schaffen.

Die Aufgabe wird durch ein elastisches Lager oder hydraulisch dämpfendes Lager mit den Merkmalen des Anspruchs 1 oder durch ein Verfahren mit den Merkmalen des Anspruchs 7 gelöst.

Vorteilhafte Ausgestaltungen sind Gegenstand der jeweiligen abhängigen Ansprüche.

Gemäß einem Aspekt weist der Kern zum Kalibrieren eines Elastomerkörpers des elastischen Lagers oder des hydraulisch dämpfenden Lagers ein erstes Kernteil und ein zweites Kernteil auf, wobei das zweite Kernteil zum Einbringen einer Vorspannung in den Elastomerkörper aufweitbar ist und eine Aufnahmeöffnung aufweist, in die das erste Kernteil einführbar ist, und wobei das zweite Kernteil ein geschlossenes Profil aufweist.

Indem das erste Kernteil in das zweite Kernteil eingeführt wird, wird das zweite Kernteil aufgeweitet und bringt eine Vorspannung in den Elastomerkörper ein. Ferner kann das zweite Kernteil vor dem Einführen des ersten Kernteils teilweise oder vollständig auf ein Endmaß aufgeweitet werden. Anschließend kann das erste Kernteil mit entsprechend geringerem Widerstand in das zweite Kernteil eingeführt werden.

So kann der Elastomerkörper ohne Aufdornen des Kerns kalibriert werden, da das erste Kernteil das zweite Kernteil aufweitet. Dadurch kann der aus dem ersten und dem zweiten Kernteil gefügte Kern dickwandiger sein oder eine ungleichmäßige Wandstärke aufweisen, wie es beispielsweise bei rechteckförmigen Kernen der Fall ist.

Mit dem Kern kann sowohl ein elastisches Lager als auch ein hydraulisch dämpfendes Lager von innen kalibriert werden. Dadurch kann es zu keiner kalibrierbedingten Druckerhöhung im Lager kommen, und gleichzeitig wird eine Beschädigung der Dichtungen durch das Kalibrieren verhindert. Ferner können mittels der Innenkalibrierung auch dicke Kerne und Kerne mit ungleichmäßigen Formen, beispielsweise mit rechteckigen oder ovalen Querschnitten, zum Kalibrieren verwendet werden.

Durch das geschlossene Profil des zweiten Kernteils weist dieses keinen Spalt auf, aus dem Flüssigkeit heraustreten kann. Damit kann der Kern auch zur Kalibrierung eines Elastomerkörpers eines hydraulisch dämpfenden Lagers, das auch als Hydrolager bezeichnet werden kann, verwendet werden. Durch das geschlossene Profil verteilen sich die kalibrierbedingten Dehnungen gleichmäßig über den Umfang des zweiten Kerns in Kalibrierrichtung. Eine an den Kern angrenzende Fluidkammer in einem hydraulischen Lager würde daher nicht Gefahr laufen, am Kern durch die auftretenden Dehnungen durch den Kalibrierprozess einen Riss und damit eine Leckage zu bekommen. Ist das zweite Kernteil hingegen kein geschlossenes Profil, so findet die gesamte Dehnung im Spalt oder in den Spalten statt. In hydraulisch dämpfenden Lagern, bei denen Fluidkammern am Kern im Bereich der Spalte angrenzen, würde das den Spalt überbrückenden Gummi nur in diesem Bereich lokal stark durch das Kalibrieren gedehnt werden; die Gefahr, dass das Elastomer hier reißt und es zu einer Leckage kommt, ist ungleich höher als bei einem geschlossenen Profil des zweiten Kernteils.

Durch das geschlossene Profil des zweiten Kernteils kann man das Hydrolager vor der Montage kalibrieren, ohne die ringförmigen Stützstrukturen des Käfigs kleiner zu pressen. Die Ringstrukturen sind mit Dichtungen versehen, die bei einem äußeren Kalibrierprozess beschädigt werden können.

Vorteilhaft weist das erste Kernteil gegenüber dem zweiten Kernteil in einer sich quer zu einer Längsrichtung des Kerns erstreckenden x-Richtung und/oder in einer sich quer zu der Längsrichtung des Kerns und zu der x-Richtung erstreckenden y-Richtung ein Übermaß auf. Die x-Richtung und die y-Richtung sind die Richtungen, die eine zu einer Querschnittsebene des Kerns parallele Ebene aufspannen. Eine z-Richtung erstreckt sich orthogonal zu der Querschnittsebene und parallel zur Längsrichtung des Kerns.

Durch das Übermaß weitet das erste Kernteil das zweite Kernteil auf, wenn dieses in das zweite Kernteil eingeführt wird, sodass eine Vorspannung in den Elastomerkörper eingebracht wird. Dabei werden die Wände des zweiten Kernteils gestreckt. Zugspannungen in den Wänden sind die Folge. Bei besonders dünnwandigen zweiten Kernteilen entspricht die Dehnung seiner außenumfangseitigen Oberfläche in erster Näherung genau der Aufweitung der Aufnahmeöffnung durch die Kalibrierung. So sind besonders hohe Aufweitungen zu realisieren, die nur durch die Gleichmaßdehnung des Werkstoffs des zweiten Kernteils begrenzt werden.

Das erste Kernteil kann gegenüber dem zweiten Kernteil entweder nur in der x-Richtung oder nur in der y-Richtung oder in beiden Richtungen ein Übermaß aufweisen. So ist ein gezieltes Aufweiten des zweiten Kernteils des Lagers auch nur in eine Richtung möglich, was durch die jeweiligen Dimensionen des ersten Kernteils gegenüber dem zweiten Kernteil gestaltet werden kann.

Das erste Kernteil und/oder das zweite Kernteil weist im Querschnitt eine rechteckförmige Kontur auf. Durch eine solche Kontur ist die Kalibrierrichtung des Kerns genauer steuerbar.

Vorteilhaft ist das erste Kernteil als massiver Körper mit einer Befestigungsöffnung ausgebildet. Das erste Kernteil kann so für die notwendige Standfestigkeit sorgen und mit Anschraubflächen versehen sein. Dadurch wird dem Kern die erforderliche Stabilität gegeben.

Vorteilhaft ist das zweite Kernteil als eine Kernhülle ausgebildet, die plastisch verformbar ist. Durch die Ausbildung als Kernhülle weist das zweite Kernteil eine geringe Wandstärke auf. Da in diesem Fall die Aufnahmeöffnung eine ähnliche Größenordnung aufweist wie der Außenumfang des zweiten Kernteils, können besonders hohe Aufweitungen realisiert werden. Diese ist nur durch die Gleichmaßdehnung des Werkstoffs des zweiten Kernteils begrenzt.

Das erste Kernteil weist an seiner Außenfläche Ausnehmungen auf, um das Fügen zu erleichtern und die Ecken zu entlasten. Die Ausnehmungen erstrecken sich vorzugsweise in Längsrichtung des Kerns. Beim Aufweiten des zweiten Kernteils mit dem ersten Kernteil werden so in den Ecken hohe Spannungen vermieden.

Vorteilhaft sind das erste Kernteil und das zweite Kernteil aus Metall oder Kunststoff hergestellt. Diese Werkstoffe weisen insbesondere gute Eigenschaften bezüglich Dichte, Festigkeit und Verformbarkeit auf.

Das elastische Lager oder das hydraulisch dämpfende Lagerumfasst, den Kern, ein den Kern unter Ausbildung eines Spalts umgebendes äußeres Hüllrohr und einen in den Spalt eingebrachten Elastomerkörper, der den Kern und das äußere Hüllrohr miteinander verbindet.

Das äußere Hüllrohr kann im Falle eines Hydrolagers zum Beispiel als Käfig oder als käfigähnliche Struktur ausgebildet und/oder von einer Außenhülse umgeben sein. Das äußere Hüllrohr kann beispielsweise durch ringförmige Strukturen ausgebildet sein, die zumindest teilweise durch einen oder mehrere Stege verbunden sind.

Sowohl das elastische Lager als auch das hydraulisch dämpfende Lager kann von innen kalibriert werden. Die Kalibrierung kann auch bei Hydrolagern erfolgen, denen der nötige Bauraum für eine Befüllbohrung fehlt, da sie bereits vor dem Befüllvorgang erfolgen kann und keine Gefahr einer Beschädigung der Dichtungen bei der Kalibrierung besteht.

Durch das geschlossene Profil des zweiten Kernteils weist dieses keinen Spalt auf, aus dem Flüssigkeit heraustreten kann. Ferner weit ein solches Lager auch keinen mit Gummi gefüllten Spalt auf, in dem es durch die Konzentration der gesamten kalibrierbedingten Dehnung schnell zu einem Riss im Elastomer kommen kann. Damit kann der Kern auch zur Kalibrierung eines Elastomerkörpers eines hydraulisch dämpfenden Lagers verwendet werden.

Durch das geschlossene Profil des zweiten Kernteils kann man das Hydrolager vor der Montage kalibrieren, ohne die ringförmigen Stützstrukturen des Käfigs kleiner zu pressen. Die Ringstrukturen sind mit Dichtungen versehen, die bei einem äußeren Kalibrierprozess beschädigt werden können.

Zwar wäre bei Hydrolagern grundsätzlich eine Kalibrierung nach der Montage der Außenhülse denkbar, was jedoch mit einer starken Beanspruchung der Dichtungen einhergeht. Bei dem Hydrolager entfällt dies. Ferner kann vermieden werden, dass das Kalibrieren bei einem gefüllten Hydrolager durchgeführt wird, wobei der innere Druck des Hydrolagers ansteigt. Dieser Druckanstieg wird regelmäßig dadurch ausgeglichen, dass sich die Membranen ausbeulen. Die mit der höheren statischen Belastung aufgrund des höheren Innendrucks verbundene Beeinträchtigung der Lebensdauer der Membran, und somit des Hydrolagers, kann demnach ebenfalls vermieden werden. Dieser Nachteil kann zwar mit einer Befüllbohrung umgangen werden, dazu wird jedoch ausreichend Bauraum benötigt.

Bei dem Lager ist das zweite Kernteil aufgeweitet und bringt eine Vorspannung in den Elastomerkörper ein. Dadurch werden herstellungsbedingte Zugspannungen in dem Elastomerkörper ausgeglichen.

Vorteilhaft ist der Elastomerkörper mit dem zweiten Kernteil stoffschlüssig verbunden. Die stoffschlüssige Verbindung wird beispielsweise dadurch hergestellt, dass der Elastomerkörper vor der Montage des Lagers an das zweite Kernteil anvulkanisiert wird. Dadurch ist eine besonders stabile Verbindung des Elastomerkörpers mit dem Kern gewährleistet.

Gemäß einem weiteren Aspekt wird ein Verfahren zum Herstellen eines elastischen Lagers oder eines hydraulisch dämpfenden Lagers vorgeschlagen, das folgende Verfahrensschritte umfasst: Zuerst werden ein Kern und ein den Kern unter Ausbildung eines Spaltes umgebendes äußeres Hüllrohr bereitgestellt, im Falle eines Hydrolagers zum Beispiel ein Käfig, , wobei der Kern ein erstes Kernteil und ein zweites Kernteil aufweist, wobei das erste Kernteil und/oder das zweite Kernteil im Querschnitt eine rechteckige Kontur aufweist, wobei das erste Kernteil an seiner Außenfläche Ausnehmungen aufweist, um das Fügen zu erleichtern und die Ecken zu entlasten, wobei das zweite Kernteil zum Einbringen einer Vorspannung in einen Elastomerkörper aufweitbar ist und eine Aufnahmeöffnung aufweist, in die das erste Kernteil einführbar ist, und wobei das zweite Kernteil ein geschlossenes Profil aufweist. Anschließend wird der Elastomerkörper in den Spalt zwischen das äußere Hüllrohr und das zweite Kernteil, der den Kern und das äu-βere Hüllrohr miteinander verbindet, eingebracht. Schließlich wird das erste Kernteil in die Aufnahmeöffnung des zweiten Kernteils eingeführt.

Bei dem Verfahren wird somit zunächst ein Elastomerkörper zwischen das äußere Hüllrohr und das zweite Kernteil eingebracht. Beispielsweise kann der Elastomerkörper an das äußere Hüllrohr und das zweite Kernteil anvulkanisiert werden. Anschließend wird das erste Kernteil in die Aufnahmeöffnung des zweiten Kernteils eingeführt. Dadurch wird das zweite Kernteil aufgeweitet und bringt eine Vorspannung in den Elastomerkörper ein.

Vorteilhaft kann das zweite Kernteil vor dem Einführen des ersten Kernteils in die Aufnahmeöffnung des zweiten Kernteils zum Einbringen einer Vorspannung in den Elastomerkörper bereits teilweise oder nahezu vollständig auf sein Endmaß nach der Kalibrierung aufgeweitet und/oder umgeformt werden. Auch in diesem Fall werden durch die eingebrachte Vorspannung die herstellungsbedingten Zugspannungen im Elastomerkörper ausgeglichen. Nach oder während des Aufweitens und/oder Umformens wird das erste Kernteil in die Aufnahmeöffnung des zweiten Kernteils eingeführt. Das vorherige Aufweiten und/oder Umformen kann dadurch ferner ein erleichtertes Einführen des ersten Kernteils ermöglichen.

Vorteilhaft wird das erste Kernteil beim Einführen des ersten Kernteils in die Aufnahmeöffnung des zweiten Kernteils zum Einbringen einer Vorspannung in den Elastomerkörper in die Aufnahmeöffnung des zweiten Kernteils eingepresst, um das zweite Kernteil aufzuweiten und/oder umzuformen.

Dies ist möglich, wenn das erste Kernteil gegenüber dem zweiten Kernteil in der x-Richtung und/oder in der y-Richtung Übermaß aufweist. Sodann weitet das erste Kernteil das zweite Kernteil nach dem Einpressen auf und/oder formt dieses um, sodass eine Vorspannung in den Elastomerkörper eingebracht wird. Dadurch werden die herstellungsbedingten Zugspannungen in dem Elastomerkörper ausgeglichen oder ein anderer für die Lebensdauer des Elastomerkörpers positiver Zustand gezielt eingestellt. Zum Beispiel kann ein Dehnungszustand im Elastomerkörper durch die Kalibrierung eingestellt werden, der dazu führt, dass während der dynamischen Belastung des Bauteils in kritischen Bereichen des Elastomerkörpers für die Lebensdauer besonders günstige, nur schwellende Druckspannungen vorherrschen.

Vorteilhaft wird beim Einbringen des Elastomerkörpers zwischen das äußere Hüllrohr und das zweite Kernteil der Elastomerkörper mit dem äußeren Hüllrohr und/oder dem zweiten Kernteil stoffschlüssig verbunden. Eine stoffschlüssige Verbindung ist insbesondere mittels Vulkanisation möglich und gewährleistet eine besonders stabile Verbindung des Elastomerkörpers mit dem äußeren Hüllrohr und/oder dem zweiten Kernteil.

Nachfolgend werden der Kern, das elastische Lager, das hydraulisch dämpfende Lager, das Verfahren sowie weitere Vorteile und Merkmale anhand von Ausführungsbeispielen näher beschrieben, die in den Zeichnungen schematisch dargestellt sind. Hierbei zeigt:
- Fig. 1: einen Vertikalschnitt durch einen Kern gemäß einem ersten Ausführungsbeispiel;
- Fig. 2: einen Vertikalschnitt durch einen Kern gemäß einem zweiten Ausführungsbeispiel;
- Fig. 3: einen Vertikalschnitt durch einen Kern gemäß einem dritten Ausführungsbeispiel;
- Fig. 4: einen Vertikalschnitt durch ein erstes Kernteil gemäß einem vierten Ausführungsbeispiel;
- Fig. 5: einen Horizontalschnitt durch ein elastisches Lager gemäß einem fünften Ausführungsbeispiel vor dem Einführen des ersten Kernteils in das zweite Kernteil;
- Fig. 6: einen Horizontalschnitt durch das elastische Lager aus Fig. 5 nach dem Einführen des ersten Kernteils in das zweite Kernteil;
- Fig. 7: eine perspektivische Ansicht eines hydraulisch dämpfenden Lagers gemäß einem sechsten Ausführungsbeispiel; und
- Fig. 8: eine perspektivische Ansicht des hydraulisch dämpfenden Lagers aus Fig. 7, wobei das erste Kernteil in die Aufnahmeöffnung des zweiten Kernteils eingeführt ist.

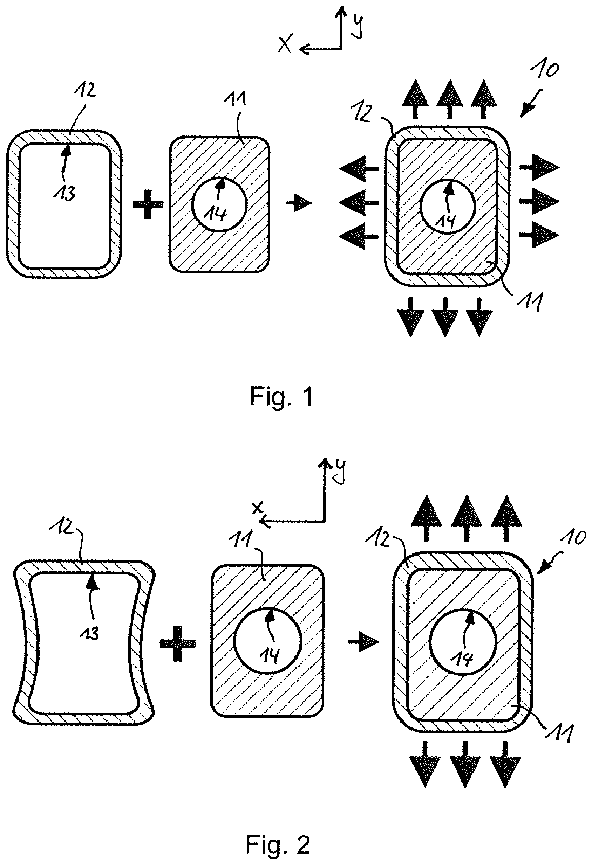

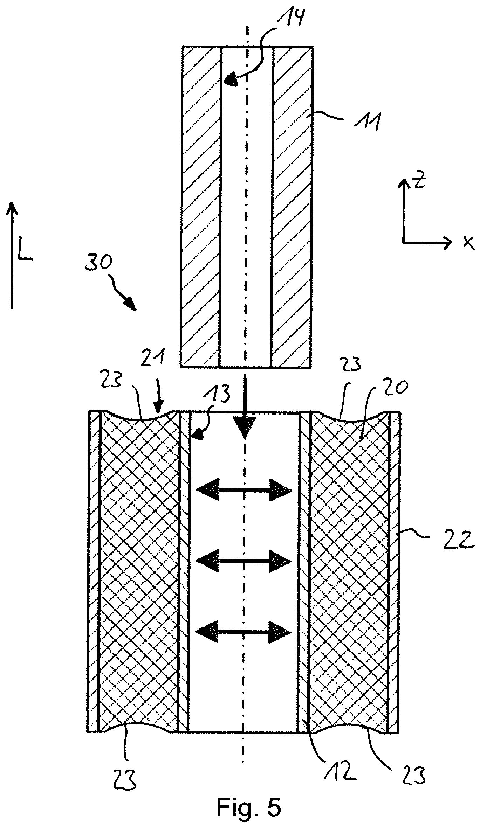

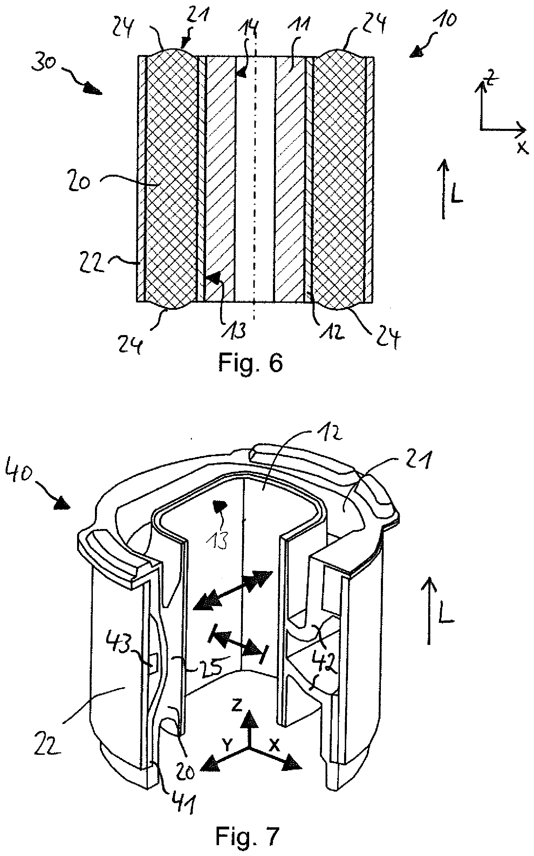

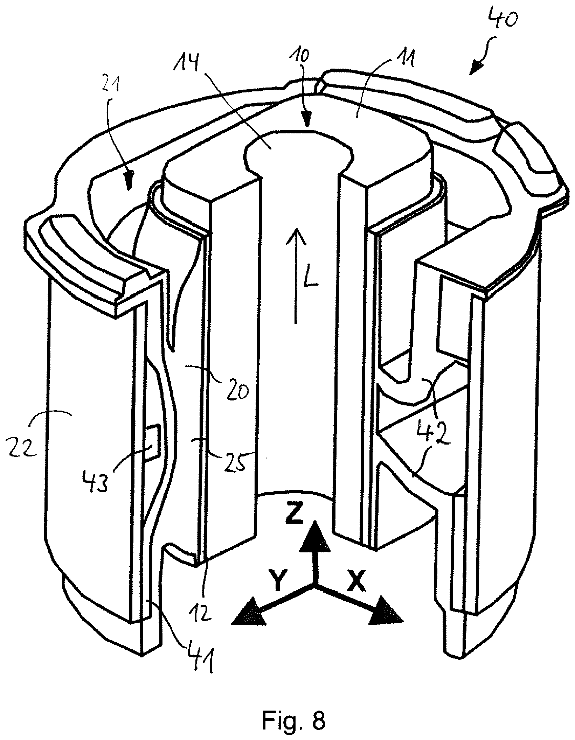

In Fig. 1, 2 und 3 ist jeweils ein Kern 10 zum Kalibrieren eines Elastomerkörpers 20 eines elastischen Lagers 30, wie es in Fig. 5 und 6 gezeigt ist, oder eines hydraulisch dämpfenden Lagers 40, wie es in Fig. 7 und 8 gezeigt ist, dargestellt.

Der Kern 10 umfasst ein erstes Kernteil 11 und ein zweites Kernteil 12. Das zweite Kernteil 12 hat jeweils ein geschlossenes Profil, ist aufweitbar und weist eine Aufnahmeöffnung 13 auf, in die das erste Kernteil 11 einführbar ist. In den Fig. 1, 2 und 3 sind das erste Kernteil 11 und das zweite Kernteil 12 jeweils einmal separat gezeigt und einmal in einem Zustand, in dem das erste Kernteil 11 in der Aufnahmeöffnung 13 des zweiten Kernteils 12 aufgenommen ist, sodass das erste Kernteil 11 und das zweite Kernteil 12 den Kern 10 bilden.

Das erste Kernteil 11 kann als ein massiver Körper mit einer Befestigungsöffnung 14 ausgebildet sein. Das erste Kernteil 11 kann so für die notwendige Standfestigkeit sorgen und mit Anschraubflächen versehen sein. Dadurch wird dem Kern 10 die erforderliche Stabilität gegeben. Das erste Kernteil 11 und das zweite Kernteil 12 können insbesondere aus Metall oder Kunststoff hergestellt sein.

Wie in Fig. 1 bis 3 zu sehen ist, kann das zweite Kernteil 12 als Kernhülle ausgebildet sein, die plastisch verformbar ist. In diesem Fall weist das zweite Kernteil 12 eine geringe Dicke auf. Da in diesem Fall die Aufnahmeöffnung 13 eine ähnliche Größenordnung aufweist wie der Außenumfang des ersten Kernteils 11, können besonders hohe Aufweitungen realisiert werden.

In Fig. 1 ist ein erstes Ausführungsbeispiel des Kerns 10 gezeigt, bei dem das erste Kernteil 11 gegenüber dem zweiten Kernteil 12 in einer sich quer zu einer Längsrichtung L des Kerns 10 erstreckenden x-Richtung und in einer sich quer zu der Längsrichtung L des Kerns 10 und zu der x-Richtung erstreckenden y-Richtung ein Übermaß aufweist. Das erste Kernteil 11 und das zweite Kernteil 12 weisen jeweils eine rechteckförmige Kontur auf, wobei die Ecken in den vorliegenden Beispielen jeweils abgerundet sind.

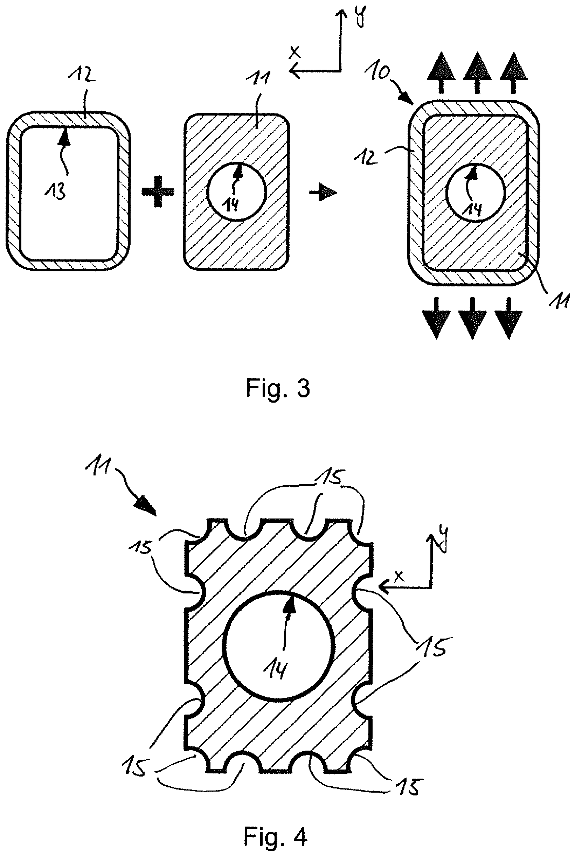

Die Kernteile 11, 12 können ferner oval oder rund ausgestaltet sein oder eine andere Form aufweisen. Dadurch, dass die Kernteile 11, 12 nicht notwendigerweise rund sein müssen, lässt sich die Aufweitung des zweiten Kernteils 12 präzise definieren, sodass es beispielsweise auch möglich ist, wie in Fig. 3 gezeigt, dass das zweite Kernteil 12 nur in y-Richtung aufgeweitet wird. Alternativ kann das zweite Kernteil 12 auch nur in der x-Richtung aufgeweitet werden, was dadurch darstellbar ist, dass das erste Kernteil 11 gegenüber dem zweiten Kernteil 12 nur in der x-Richtung Übermaß aufweist (nicht dargestellt). Es ist ferner denkbar, dass das Übermaß des ersten Kernteils 11 gegenüber dem zweiten Kernteil 12 in x-Richtung betragsmäßig von dem Übermaß in y-Richtung abweicht.

Wie in Fig. 2 gezeigt, kann das erste Kernteil 11 gegenüber dem zweiten Kernteil 12 in der y-Richtung ein Übermaß aufweisen. Ferner kann das zweite Kernteil 12 im entlasteten Zustand eine Form aufweisen, die von der Form abweicht, die das zweite Kernteil 12 nach dem Einführen des ersten Kernteils 11 aufweist. Im gezeigten Beispiel sind die Wände des zweiten Kernteils 12 teilweise zunächst nach innen geformt, sodass diese eine leichte Einbuchtung ausbilden. Das erste Kernteil 11 gleicht die Einbuchtungen nach dem Einführen in die Aufnahmeöffnung 13 des zweiten Kernteils 12 aus und verformt das zweite Kernteil 12 in der Art, dass es zu einem Kalibriereffekt kommt.

In Fig. 4 ist zu sehen, dass das erste Kernteil 11 an seiner Außenfläche Ausnehmungen 15 aufweist. Die Ausnehmungen 15 erstrecken sich vorzugsweise in Längsrichtung L des ersten Kernteils 11 und können insbesondere in den Ecken des ersten Kernteils 11 vorgesehen sein, um das Einführen des ersten Kernteils 11 in das zweite Kernteil 12 zu erleichtern und die Ecken zu entlasten. Andernfalls können in den Ecken beim Aufweiten des zweiten Kernteils 12 hohe Spannungen entstehen, da die Geometrien des ersten Kernteils 11 und des zweiten Kernteils 12 zueinander sehr eng toleriert werden müssen.

Ein elastisches Lager 30, das in den Fig. 5 und 6 gezeigt ist, oder ein hydraulisch dämpfendes Lager 40, das in den Fig. 7 und 8 gezeigt ist, weist den Kern 10, umfassend das erste Kernteil 11 und das zweite Kernteil 12, ein den Kern 10 unter Ausbildung eines Spalts 21 umgebendes äußeres Hüllrohr 22 und den Elastomerkörper 20 auf, der in den Spalt 21 eingebracht ist und den Kern 10 und das äußere Hüllrohr 22 miteinander verbindet. Der Elastomerkörper 20 kann mit dem zweiten Kernteil 12 insbesondere stoffschlüssig verbunden sein. Eine stoffschlüssige Verbindung ist insbesondere mittels Vulkanisation möglich und gewährleistet eine besonders stabile Verbindung des Elastomerkörpers 20 mit dem äußeren Hüllrohr 22 und/oder dem zweiten Kernteil 12.

Das zweite Kernteil 12 ist aufweitbar, um eine Vorspannung in einen Elastomerkörper 20 einzubringen, wie es in den Fig. 5 und 6 dargestellt ist. Dabei zeigt Fig. 5 den Zustand vor dem Einfügen des ersten Kernteils 11 in die Aufnahmeöffnung 13 des zweiten Kernteils 12 und Fig. 6 den Zustand nach dem Einführen des ersten Kernteils 11 in die Aufnahmeöffnung 13 des zweiten Kernteils 12.

Vor dem Einführen ist ein Elastomerkörper 20 in einen Spalt 21 zwischen dem zweiten Kernteil 12 und dem äußeren Hüllrohr 22 eingebracht. Im Beispiel in Fig. 5 weist der Elastomerkörper 20 Einbuchtungen 23 an seinen Enden auf, die dadurch entstehen können, dass sich beispielsweise nach einem Vulkanisieren des Elastomers dieses abkühlt und dabei zusammenzieht. Fig. 5 ist ferner zu entnehmen, dass das erste Kernteil 11 gegenüber dem zweiten Kernteil 12 im vorliegenden Beispiel wenigstens in x-Richtung ein Übermaß aufweist.

Wie in Fig. 6 dargestellt, kann das erste Kernteil 11 in die Aufnahmeöffnung 13 des zweiten Kernteils 12 eingepresst sein. Durch das Einpressen mit Übermaß wird das zweite Kernteil 12 aufgeweitet, sodass der Elastomerkörper 20 zusammengepresst wird, wodurch eine Vorspannung in diesen eingebracht wird und sich an seinen Enden, wo sich zuvor die Einbuchtungen 23 befunden haben, nun Ausbauchungen 24 bilden.

In Fig. 7 ist das hydraulisch dämpfende Lager 40, das einen Dämpfungskanal 43 aufweist, vor der Montage des ersten Kernteils 11 mit Übermaß gezeigt. Primär soll das hydraulisch dämpfende Lager 40 an dem Polster 25 des Elastomerkörpers 20 in y-Richtung kalibriert werden, um dort die Zugspannungen zu kompensieren. Dieses ist notwendig, da der Elastomerkörper 20 zwischen dem zweiten Kernteil 12 und einer äußeren Anbindungsstruktur 41 eingespannt ist. Wie gezeigt, kann das äußere Hüllrohr 22 die äußere Anbindungsstruktur 41 ausbilden. Die äußere Anbindungsstruktur 41 weist ringförmige Strukturen 45 auf, die zumindest teilweise durch einen oder mehrere Stege 46 verbunden sind. Das äußere Hüllrohr 22 ist von einer Außenhülse 44 umgeben.

In x-Richtung ist hingegen keine oder höchstens eine geringe Kalibrierung vorteilhaft, da das hydraulisch dämpfende Lager Membranen 42 aufweist, die nicht so eng zwischen zweitem Kernteil 12 und der äußeren Anbindungsstruktur 41 angebunden sind. Durch den verarbeitungsbedingten Schrumpf hervorgerufene Zugspannungen können daher bereits durch leichte Verformung der Membranen 42 abgebaut werden.

In Fig. 8 ist das hydraulisch dämpfende Lager 40 aus Fig. 7 nach der Kalibrierung in y-Richtung sowie nach dem Einführen des ersten Kernteils 11 gezeigt. Durch die Aufweitung des zweiten Kernteils 12 in y-Richtung ist das Polster 25 des Elastomerkörpers 20 ausgebaucht. Die Geometrie der Membranen 42 ist hingegen nahezu unverändert.

Alternativ zum Einpressen kann das zweite Kernteil 12 vor dem Einführen des ersten Kernteils 11 in die Aufnahmeöffnung 13 des zweiten Kernteils 12 zum Einbringen einer Vorspannung in den Elastomerkörper 20 aufgeweitet und/oder umgeformt werden. In Fig. 2 ist dies beispielsweise in x-Richtung gezeigt. In diesem Fall werden die herstellungsbedingten Zugspannungen im Elastomerkörper 20 durch die eingebrachte Vorspannung ausgeglichen. Nach oder während des Aufweitens und/oder Umformen wird das erste Kernteil 11 in die Aufnahmeöffnung 13 des zweiten Kernteils 12 eingeführt. Das vorherige Aufweiten und/oder Umformen kann so ein erleichtertes Einführen des ersten Kernteils 11 ermöglichen.

Nachfolgend wird ein mögliches Verfahren zum Herstellen des elastischen Lagers 30 oder des hydraulisch dämpfenden Lagers 40 anhand der Figuren beschrieben.

Zunächst werden das äußere Hüllrohr 22 und der Kern 10 bereitgestellt. Sodann wird der Elastomerkörper 20 zwischen das äußere Hüllrohr 22 und das zweite Kernteil 12 eingebracht. Schließlich wird das erste Kernteil 11 in die Aufnahmeöffnung 13 des zweiten Kernteils 12 eingeführt.

Zum Einbringen einer Vorspannung in den Elastomerkörper 20 kann das zweite Kernteil 12 aufgeweitet und/oder umgeformt werden. So werden die herstellungsbedingten Zugspannungen im Elastomerkörper 20 durch die eingebrachte Vorspannung ausgeglichen und der Widerstand beim Einführen des ersten Kernteils 11 in die Aufnahmeöffnung 13 des zweiten Kernteils 12 verringert.

Ferner kann das erste Kernteil 11 zum Einbringen einer Vorspannung in den Elastomerkörper 20 in die Aufnahmeöffnung 13 des zweiten Kernteils 12 eingepresst werden, um das zweite Kernteil aufzuweiten und/oder umzuformen. Um eine Aufweitung mittels Einpressen zu ermöglichen, ist erforderlich, dass das erste Kernteil 11 gegenüber dem zweiten Kernteil 12 in der x-Richtung und/oder in der y-Richtung ein Übermaß aufweist.

Der Elastomerkörper 20 kann mit dem äußeren Hüllrohr 22 und/oder dem zweiten Kernteil 12 stoffschlüssig verbunden werden. Eine stoffschlüssige Verbindung kann beispielsweise mittels Vulkanisation unter Zuhilfenahme von Haftmitteln auf dem äußeren Hüllrohr 22 und dem zweiten Kernteil 12 erreicht werden.

Der hier beschriebene Kern 10, die beschriebenen Lager und das Verfahren zum Herstellen der Lager haben gemein, dass sie eine Möglichkeit zum Kalibrieren eines Elastomerkörpers 20 schaffen, bei der der Kern 10 eine variable Geometrie aufweisen kann, nicht zwingend rund sein muss und eine dicke und massive Ausgestaltung aufweisen kann. Durch das geschlossene Profil des zweiten Kernteils 12 kann ferner der Elastomerkörper 20 eines hydraulisch dämpfenden Lagers kalibriert werden, und nicht nur der eines elastischen Lagers.

### Bezugszeichenliste

- 10: Kern
- 11: erstes Kernteil
- 12: zweites Kernteil
- 13: Aufnahmeöffnung
- 14: Befestigungsöffnung
- 15: Ausnehmung
- 20: Elastomerkörper
- 21: Spalt
- 22: äußeres Hüllrohr
- 23: Einbuchtung
- 24: Ausbauchung
- 25: Polster
- 30: elastisches Lager
- 40: hydraulisch dämpfendes Lager
- 41: äußere Anbindungsstruktur
- 42: Membran
- 43: Dämpfungskanal
- 44: Außenhülse
- 45: ringförmige Struktur
- 46: Steg

- L: Längsrichtung

## Patentansprüche

1. Elastisches Lager (30) oder hydraulisch dämpfendes Lager (40) umfassend einen Kern (10), ein den Kern (10) unter Ausbildung eines Spalts (21) umgebendes äußeres Hüllrohr (22) und einen in den Spalt (21) eingebrachten Elastomerkörper (20), der den Kern (10) und das äußere Hüllrohr (22) miteinander verbindet;
wobei der Kern (10) zum Kalibrieren des Elastomerkörpers (20) des elastischen Lagers (30) oder des hydraulisch dämpfenden Lagers (40), ein erstes Kernteil (11) und ein zweites Kernteil (12) aufweist, wobei das zweite Kernteil (12) zum Einbringen einer Vorspannung in den Elastomerkörper (20) aufweitbar ist und eine Aufnahmeöffnung (13) aufweist, in die das erste Kernteil (11) einführbar ist, und wobei das zweite Kernteil (12) ein geschlossenes Profil aufweist,
wobei das erste Kernteil (11) und/oder das zweite Kernteil (12) im Querschnitt eine rechteckförmige Kontur aufweist, **dadurch gekennzeichnet, dass** das erste Kernteil (11) an seiner Außenfläche Ausnehmungen (15) aufweist, um das Fügen zu erleichtern und die Ecken zu entlasten.

2. Elastisches Lager (30) oder hydraulisch dämpfendes Lager (40) nach Anspruch 1, **dadurch gekennzeichnet, dass** das erste Kernteil (11) gegenüber dem zweiten Kernteil (12) in einer sich quer zu einer Längsrichtung (L) des Kerns (10) erstreckenden x-Richtung und/oder in einer sich quer zu der Längsrichtung (L) des Kerns (10) und zu der x-Richtung erstreckenden y-Richtung ein Übermaß aufweist.

3. Elastisches Lager (30) oder hydraulisch dämpfendes Lager (40) nach einem der vorhergehenden Ansprüche, **dadurch gekennzeichnet, dass** das erste Kernteil (11) als ein massiver Körper mit einer Befestigungsöffnung (14) ausgebildet ist.

4. Elastisches Lager (30) oder hydraulisch dämpfendes Lager (40) nach einem der vorhergehenden Ansprüche, **dadurch kennzeichnet, dass** das zweite Kernteil (12) als eine Kernhülle ausgebildet ist, die plastisch verformbar ist.

5. Elastisches Lager (30) oder hydraulisch dämpfendes Lager (40) nach einem der vorhergehenden Ansprüche, **dadurch gekennzeichnet, dass** das erste Kernteil (11) und das zweite Kernteil (12) aus Metall oder Kunststoff hergestellt sind.

6. Elastisches Lager (30) oder hydraulisch dämpfendes Lager (40) nach Anspruch 1, **dadurch gekennzeichnet, dass** der Elastomerkörper (20) mit dem zweiten Kernteil (12) stoffschlüssig verbunden ist.

7. Verfahren zum Herstellen eines elastischen Lagers (30) oder eines hydraulisch dämpfenden Lagers (40), umfassend die folgenden Verfahrensschritte:
a) Bereitstellen eines Kerns (10) und eines den Kern (10) unter Ausbildung eines Spalts (21) umgebenden äußeren Hüllrohres (22), wobei der Kern ein erstes Kernteil (11) und ein zweites Kernteil (12) aufweist, wobei das erste Kernteil (11) und/oder das zweite Kernteil (12) im Querschnitt eine rechteckige Kontur aufweist, wobei das erste Kernteil (11) an seiner Außenfläche Ausnehmungen (15) aufweist, um das Fügen zu erleichtern und die Ecken zu entlasten, wobei das zweite Kernteil (12) zum Einbringen einer Vorspannung in einen Elastomerkörper (20) aufweitbar ist und eine Aufnahmeöffnung (13) aufweist, in die das erste Kernteil (11) einführbar ist, und wobei das zweite Kernteil (12) ein geschlossenes Profil aufweist;
b) Einbringen des Elastomerkörpers (20) in den Spalt zwischen das äußere Hüllrohr (22) und das zweite Kernteil (12), der den Kern (10) und das äußere Hüllrohr (22) miteinander verbindet; und
c) Einführen des ersten Kernteils (11) in die Aufnahmeöffnung (13) des zweiten Kernteils (12).

8. Verfahren nach Anspruch 7, **dadurch gekennzeichnet, dass** das zweite Kernteil (12) vor Schritt c) zum Einbringen einer Vorspannung in den Elastomerkörper (20) aufgeweitet und/oder umgeformt wird.

9. Verfahren nach Anspruch 7 oder 8, **dadurch gekennzeichnet, dass** das erste Kernteil (11) in Schritt c) zum Einbringen einer Vorspannung in den Elastomerkörper (20) in die Aufnahmeöffnung (13) des zweiten Kernteils (12) eingepresst wird, um das zweite Kernteil (12) aufzuweiten und/oder umzuformen.

10. Verfahren nach einem der Ansprüche 7 bis 9, **dadurch gekennzeichnet, dass** in Schritt b) der Elastomerkörper (20) mit dem äußeren Hüllrohr (22) und/oder dem zweiten Kernteil (12) stoffschlüssig verbunden wird.

## Claims

1. Elastic bearing (30) or hydraulically damping bearing (40) comprising a core (10), an outer sleeve tube (22) surrounding the core (10) while forming a gap (21), and an elastomeric body (20) inserted into the gap (21) and connecting the core (10) and the outer sleeve tube (22) together; the core (10) for calibrating the elastomeric body (20) of the elastic bearing (30) or the hydraulically damping bearing (40) comprising a first core part (11) and a second core part (12), the second core part (12) being expandable for introducing a preload into the elastomeric body (20) and comprising a receiving opening (13) into which the first core part (11) is insertable, and the second core part (12) having a closed profile, the first core part (11) and/or the second core part (12) having a rectangular contour in cross section, **characterized in that** the first core part (11) has recesses (15) on its outer surface to facilitate joining and to relieve the corners.

2. Elastic bearing (30) or hydraulically damping bearing (40) according to claim 1, **characterized in that** the first core part (11) has an oversize relative to the second core part (12) in an x-direction extending transversely to a longitudinal direction (L) of the core (10) and/or in a y-direction extending transversely to the longitudinal direction (L) of the core (10) and to the x-direction.

3. Elastic bearing (30) or hydraulically damping bearing (40) according to one of the preceding claims, **characterized in that** the first core part (11) is formed as a solid body with a mounting opening (14).

4. Elastic bearing (30) or hydraulically damping bearing (40) according to one of the preceding claims, **characterized in that** the second core part (12) is formed as a core shell which is plastically deformable.

5. Elastic bearing (30) or hydraulically damping bearing (40) according to one of the preceding claims, **characterized in that** the first core part (11) and the second core part (12) are made of metal or plastic.

6. Elastic bearing (30) or hydraulically damping bearing (40) according to claim 1, **characterized in that** the elastomeric body (20) is connected to the second core part (12) by a material bond.

7. A method of manufacturing an elastic bearing (30) or a hydraulically damping bearing (40), comprising the following method steps:
a) providing a core (10) and an outer sleeve tube (22) surrounding the core (10) while forming a gap (21), the core having a first core part (11) and a second core part (12), the first core part (11) and/or the second core part (12) having a rectangular contour in cross-section, wherein the first core part (11) has recesses (15) on its outer surface to facilitate joining and to relieve the corners, wherein the second core part (12) is expandable for introducing a prestress into an elastomeric body (20) and has a receiving opening (13) into which the first core part (11) is insertable, and wherein the second core part (12) has a closed profile;
b) inserting the elastomeric body (20) into the gap between the outer sleeve tube (22) and the second core part (12) connecting the core (10) and the outer sleeve tube (22); and
c) inserting the first core part (11) into the receiving opening (13) of the second core part (12).

8. The method according to claim 7, **characterized in that** the second core part (12) is expanded and/or deformed before step c) for introducing a prestress into the elastomeric body (20).

9. The method according to claim 7 or 8, **characterized in that** the first core part (11) is pressed into the receiving opening (13) of the second core part (12) in step c) for introducing a prestress into the elastomeric body (20) to expand and/or reshape the second core part (12).

10. A method according to any one of claims 7 to 9, **characterized in that** in step b) the elastomeric body (20) is bonded to the outer sleeve tube (22) and/or the second core part (12).

## Revendications

1. Support élastique (30) ou support à amortissement hydraulique (40) comprenant un noyau (10), un tube d'enveloppe extérieur (22) entourant le noyau (10) en formant un interstice (21) et un corps élastomère (20) introduit dans l'interstice (21), qui relie entre eux le noyau (10) et le tube d'enveloppe extérieur (22) ; le noyau (10) servant à calibrer le corps élastomère (20) du support élastique (30) ou du support à amortissement hydraulique (40) et comprenant une première partie de noyau (11) et une deuxième partie de noyau (12), la deuxième partie de noyau (12) pouvant être élargie pour introduire une précontrainte dans le corps élastomère (20) et présentant une ouverture de réception (13), dans laquelle la première partie de noyau (11) peut être introduite, et la deuxième partie de noyau (12) présentant un profil fermé, la première partie de noyau (11) et/ou la deuxième partie de noyau (12) présentant un contour rectangulaire en section transversale, **caractérisé en ce que** la première partie de noyau (11) présente des évidements (15) sur sa surface extérieure pour faciliter l'assemblage et soulager les coins.

2. Support élastique (30) ou support à amortissement hydraulique (40) selon la revendication 1, **caractérisé en ce que** la première partie de noyau (11) présente un surdimensionnement par rapport à la deuxième partie de noyau (12) dans une direction x s'étendant transversalement à une direction longitudinale (L) du noyau (10) et/ou dans une direction y s'étendant transversalement à la direction longitudinale (L) du noyau (10) et à la direction x.

3. Support élastique (30) ou support à amortissement hydraulique (40) selon l'une quelconque des revendications précédentes, **caractérisé en ce que** la première partie de noyau (11) est réalisée sous la forme d'un corps massif avec une ouverture de fixation (14).

4. Support élastique (30) ou support à amortissement hydraulique (40) selon l'une quelconque des revendications précédentes, **caractérisé en ce que** la deuxième partie de noyau (12) est réalisée sous la forme d'une enveloppe centrale qui est déformable plastiquement.

5. Support élastique (30) ou support à amortissement hydraulique (40) selon l'une quelconque des revendications précédentes, **caractérisé en ce que** la première partie de noyau (11) et la deuxième partie de noyau (12) sont fabriquées en métal ou en matière plastique.

6. Support élastique (30) ou support à amortissement hydraulique (40) selon la revendication 1, **caractérisé en ce que** le corps élastomère (20) est relié à la deuxième partie de noyau (12) par une liaison de matière.

7. Procédé de fabrication d'un support élastique (30) ou d'un support à amortissement hydraulique (40), comprenant les étapes de procédé suivantes :
a) préparation d'un noyau (10) et d'un tube d'enveloppe extérieur (22) entourant le noyau (10) en formant un interstice (21), le noyau présentant une première partie de noyau (11) et une deuxième partie de noyau (12), la première partie de noyau (11) et/ou la deuxième partie de noyau (12) présentant en section transversale un contour rectangulaire, la première partie de noyau (11) présentant sur sa surface extérieure des évidements (15) pour faciliter l'assemblage et soulager les coins, la deuxième partie de noyau (12) pouvant être élargie pour introduire une précontrainte dans un corps élastomère (20) et présentant une ouverture de réception (13) dans laquelle la première partie de noyau (11) peut être introduite, et la deuxième partie de noyau (12) présentant un profil fermé ;
b) introduction du corps élastomère (20) dans l'interstice entre le tube d'enveloppe extérieur (22) et la deuxième partie de noyau (12), qui relie le noyau (10) et le tube d'enveloppe extérieur (22) entre eux ; et
c) introduction de la première partie de noyau (11) dans l'ouverture de réception (13) de la deuxième partie de noyau (12).

8. Procédé selon la revendication 7, **caractérisé en ce que** la deuxième partie de noyau (12) est élargie et/ou déformée avant l'étape c) pour introduire une précontrainte dans le corps élastomère (20).

9. Procédé selon la revendication 7 ou 8, **caractérisé en ce que** la première partie de noyau (11) est pressée dans l'ouverture de réception (13) de la deuxième partie de noyau (12) à l'étape c) pour introduire une précontrainte dans le corps élastomère (20), afin d'élargir et/ou de déformer la deuxième partie de noyau (12).

10. Procédé selon l'une des revendications 7 à 9, **caractérisé en ce qu'**à l'étape b), le corps élastomère (20) est assemblé par liaison de matière avec le tube d'enveloppe extérieur (22) et/ou la deuxième partie de noyau (12).
